(19) Europäisches Patentamt / European Patent Office / Office européen des brevets

(11) **EP 3 228 988 B1**

(12) **EUROPÄISCHE PATENTSCHRIFT**

(45) Veröffentlichungstag und Bekanntmachung des Hinweises auf die Patenterteilung:
**06.05.2020  Patentblatt 2020/19**

(51) Int Cl.:
***G01C 21/20*** *(2006.01)*    ***H04W 4/021*** *(2018.01)*
***G01C 21/30*** *(2006.01)*

(21) Anmeldenummer: **17159608.3**

(22) Anmeldetag: **07.03.2017**

(54) **GPS-BASIERTE GEBIETSERKENNUNG IN FAHRZEUGEN**

GPS-BASED AREA RECOGNITION IN VEHICLES

DÉTECTION DE ZONE PAR GPS DANS DES VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2016  DE 102016204823**

(43) Veröffentlichungstag der Anmeldung:
**11.10.2017  Patentblatt 2017/41**

(73) Patentinhaber: **Ford Global Technologies, LLC Dearborn, MI 48126 (US)**

(72) Erfinder:
 • **ROSENBERG, Stephanie**
  **50354 Hürth (DE)**
 • **STRACKBEIN, Maria**
  **51063 Köln (DE)**
 • **HAASE, Sascha**
  **42929 Wermelskirchen (DE)**
 • **PULATHANELI, Timur**
  **San Francisco, CA 94158 (US)**

(74) Vertreter: **Dörfler, Thomas**
  **Ford-Werke GmbH**
  **Abt. NH/364**
  **Henry-Ford-Strasse 1**
  **50735 Köln (DE)**

(56) Entgegenhaltungen:
  **US-A1- 2014 372 024**

 • **"3. Representation and Manipulation of Spatial Data" In: Nabil R. Adam; Aryya Gangopadhyay: "Database Issues in Geographic Information Systems", 31. Oktober 2012 (2012-10-31), Springer US, Boston, MA, XP055401082, ISSN: 1386-2944 ISBN: 978-1-4613-7799-3 Seiten 39-39, * Seite 39 - Seite 39 ***

**Beschreibung**

Die Erfindung betrifft ein Verfahren, mittels numerischer Geopositionsdaten, welche die aktuelle Geoposition eines Fahrzeugs angeben, sowie digitaler Karten, die Gebietspolygone enthalten, die jeweils ein geografisches Gebiet auf der Erde repräsentieren, in dem Fahrzeug zu ermitteln, in welchem der verschiedenen Gebiete sich das Fahrzeug gerade befindet, sowie ein zur Durchführung des Verfahrens eingerichtetes Fahrzeug gemäß den Oberbegriffen der unabhängigen Patentansprüche. Ein derartiges Verfahren und Fahrzeug sind aus der US 2014 / 0 372 024 A1 und aus der US 2014/0 278 038 A1 bekannt.

Von den verschiedenen Fahrerassistenzsystemen in modernen Kraftfahrzeugen arbeiten einige in Abhängigkeit von dem Umfeld, in dem sich das Fahrzeug gerade befindet, und die Funktionsgenauigkeit und -verfügbarkeit derartiger Fahrerassistenzsysteme können durch Informationen von einem Navigationssystem verbessert werden, beispielsweise durch Informationen, in welchem Staat oder sonstigen geografischen Gebiet sich das Kraftfahrzeug momentan befindet, um ein länder- oder gebietsspezifisches Systemverhalten zu ermöglichen.

Wenn ein Kraftfahrzeug ein Navigationssystem enthält, das die Geoposition des Fahrzeugs laufend mit einer digitalen Karte abgleicht, sind auch Gebietsinformationen für Fahrerassistenzsysteme leicht erhältlich, nämlich als ein Gebietscode, z. B. eine Länder-Kennung, zu der gerade befahrenen Straße.

Navigationssysteme, die GPS-Daten nutzen, berechnen die aktuelle Fahrzeugposition sehr genau in Geokoordinaten, also als Absolutposition, und viel genauer als es zur Unterstützung von Fahrerassistenzsystemen eigentlich nötig ist.

Navigationssysteme gehören oft nicht zur Standardausstattung von Kraftfahrzeugen, und selbst wenn dies der Fall ist, soll der Fahrer die Möglichkeit behalten, die Navigation zu deaktivieren.

Der Erfindung liegt die Aufgabe zu Grunde, in einem Fahrzeug mit möglichst wenig Aufwand, aber ausreichender Genauigkeit zu ermitteln, in welchem geografischen Gebiet sich das Fahrzeug gerade befindet, um die Leistungsfähigkeit und Verfügbarkeit von Fahrerassistenzsystemen sicherzustellen, falls im Fahrzeug kein Navigationssystem zur Verfügung steht oder gerade nicht in Betrieb ist.

Diese Aufgabe wird durch ein Verfahren und eine Vorrichtung mit den Merkmalen der unabhängigen Patentansprüche gelöst.

Vorteilhafte Weiterbildungen der Erfindung sind in den abhängigen Patentansprüchen angegeben.

Es wird zunächst eine Begrenzungs-Vorprüfung durchgeführt, wobei Kandidaten-Gebietspolygone ausgewählt werden, die in der Nähe der aktuellen Fahrzeugposition liegen. Die ausgewählten Kandidaten-Gebietspolygone werden dann nacheinander einem PIP-Test (Point-In-Polygon-Test) unterzogen, um zu ermitteln, ob sich die aktuelle Fahrzeugposition in einem der entsprechenden Gebiete befindet. Gemäß der Erfindung wird mindestens einem Fahrerassistenzsystem des Fahrzeugs eine Ausgangsgröße zugeführt, die angibt, ob und ggf. in welchem der Gebiete sich das Fahrzeug gerade befindet.

Die Erfindung nutzt den Umstand, dass in den meisten Kraftfahrzeugen standardmäßig zumindest ein Empfänger für globale Navigationssatellitensysteme (GNSS) verbaut ist, ein Gerät, das aus den Satellitensignalen die eigene geografische Position bestimmen kann. Derartige GPS- oder verwandte Positionsbestimmungsgeräte werden mit der Einführung des automatischen Notrufsystems für Kraftfahrzeuge (eCall) sogar vorgeschrieben und nicht ohne weiteres deaktivierbar sein.

GNSS-Geräte liefern zwar nur die absolute Geoposition als reine Zahlenwerte, doch ist es mit der Erfindung möglich, daraus mit minimalem Speicher- und Rechenaufwand Gebietsinformationen zu gewinnen, die für Fahrerassistenzsysteme genau genug sind.

Das erfindungsgemäße Verfahren benötigt nur einen minimalen Satz von geografischen Kartendaten mit entsprechend geringem Speicherbedarf und kann als Software durchgeführt werden, die auf einer sog. "Embedded Platform" laufen kann. Die Rechenzeiten sind vorherbestimmbar und geringer als bei einer genauen Positionsbestimmung.

Andererseits ist das erfindungsgemäße Verfahren wesentlich genauer als bloße Positionsschätzungen, aber um ein Vielfaches schneller und ressourcensparender als übliche Navigationssysteme. Letzteres liegt auch daran, dass für die Erfindung nur die Relativpositionen von Fahrzeug und Gebietspolygonen ermittelt werden müssen.

Das erfindungsgemäße Verfahren steht in einer gewissen Verwandtschaft zu sog. Geofencing-Algorithmen, die beim Überschreiten einer gedachten Begrenzung auf der Erde eine Aktion auslösen. Die dafür genutzten Algorithmen haben aber keine vorherbestimmten Rechenzeiten und benötigen nicht so wenig Speicherplatz und sind nicht so einfach implementierbar wie die vorliegende Erfindung.

Die US 2001 024 203 A1, US 2012 123 677 A1 und US 2007 083 325 A1 offenbaren Kartenanzeige- bzw. -bewegungsvorrichtungen, wobei aber andere Algorithmen zur Polygonverarbeitung als bei der vorliegenden Erfindung zum Einsatz kommen. Außerdem sind für die Erfindung keine Kartenanzeigevorrichtungen erforderlich.

In einer bevorzugten Ausführungsform der vorliegenden Erfindung erfolgt die Begrenzungs-Vorprüfung durch Größer/Kleiner-Vergleiche der Werte einer ersten Koordinate der aktuellen Fahrzeugposition mit den maximalen bzw. minimalen Koordinatenwerten der in den digitalen Karten enthaltenen Gebietspolygone bezüglich der ersten Koordinate sowie durch Größer/Kleiner-Vergleiche der Werte einer zweiten, zu der ersten Koordinate orthogonalen Koordinate der aktuellen Fahrzeugposition mit den maximalen bzw. minimalen Koordinatenwerten der Gebietspolygone bezüglich der zweiten Koordinate.

In bevorzugten Ausführungsformen werden die PIP-Tests ohne Schnittpunktberechnungen mittels Größer/Kleiner-Vergleichen von Koordinatenwerten nach geeigneter Koordinatenverschiebung durchgeführt, was den Rechenaufwand wesentlich vermindert.

Gemäß der Erfindung werden die mittels der Begrenzungs-Vorprüfung ausgewählten Kandidaten-Gebietspolygone durch Überlagern von parallelen Streifen in kleinere Teilpolygone unterteilt. Weiterhin wird mittels einer binären Suche ein Streifen ermittelt, in den die aktuelle Fahrzeugposition fällt, und die in den ermittelten Streifen fallenden Teilpolygone werden dann den PIP-Tests unterzogen. Dies senkt den Rechenaufwand noch mehr.

Die geografischen Gebiete sind vorzugsweise administrative oder ähnliche Gebiete, welche sich nur in Ausnahmefällen ändern. Daher ist keine häufige Aktualisierung der digitalen Karten erforderlich.

Wie beschrieben, eignet sich das erfindungsgemäße Verfahren besonders für Fahrzeuge, insbesondere Kraftfahrzeuge, worin ein Empfänger für ein globales Navigationssatellitensystem, der die Geopositionsdaten liefert, aber kein Navigationssystem eingebaut ist, und die mindestens ein Fahrerassistenzsystem aufweisen.

Es folgt eine Beschreibung von Ausführungsbeispielen anhand der Zeichnungen. Darin zeigen:

Fig. 1      ein Blockdiagramm eines Verfahrens zum Ermitteln, in welchem geografischen Gebiet sich ein Fahrzeug gerade befindet;

Fig. 2      eine Skizze zur Erläuterung des Umgrenzung-Blocks in Fig. 1;

Fig. 3      eine Skizze zur Erläuterung des PIP-Test-Blocks in Fig. 1;

Fig. 4      eine Skizze zur Erläuterung des Streifen-Binärsuche-Blocks in Fig. 1; und

Fig. 5      ein Flussdiagramm des Verfahren zum Ermitteln, in welchem geografischen Gebiet sich das Fahrzeug gerade befindet.

Das nachfolgend beschriebene System wird GPS-basierte Gebietserkennung genannt.

Ein in einem Kraftfahrzeug eingebauter GNSS-Empfänger liefert Rohdaten, welche die geografischen Koordinaten des Fahrzeugs als dessen GPS-Position oder allgemein Geoposition angeben. Außerdem ist im Fahrzeug eine digitale Karte gespeichert, welche ausschließlich zusammenhängende geografische und/oder administrative Gebiete auf der Erde darstellt, und zwar als mehr oder weniger lückenlos aneinander angrenzende Polygone, welche relevante Gebietsgrenzen darstellen bzw. an diese angenähert sind.

Auf Basis der Geopositionsdaten wird in regelmäßigen Zeitabständen, wie z. B. alle paar Sekunden, ermittelt, in welchem der geografischen oder administrativen Gebiete sich das Fahrzeug gerade befindet.

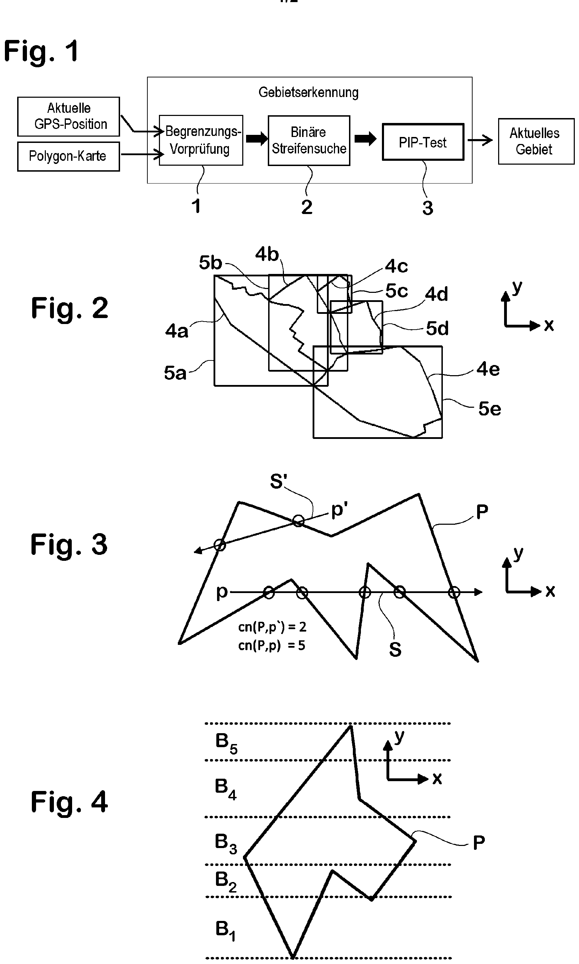

Dazu wird das in Fig. 1 im Überblick dargestellte Gebietserkennungsverfahren mittels im Fahrzeug vorhandener Hard- und Software durchgeführt.

Anhand der Geopositionsdaten und der Polygonkartendaten als Eingangsgrößen wird in einem Block 1 eine Begrenzungs-Vorprüfung durchgeführt, womit unter allen gespeicherten Gebietspolygonen jene ausgewählt werden, die aufgrund ihrer Nähe zu der aktuellen Fahrzeugposition Kandidaten für ein Gebiet sind, in dem sich das Fahrzeug gerade befindet.

In einem ersten Ausführungsbeispiel werden die im Block 1 identifizierten Kandidaten-Gebietspolygone im Block 3 nacheinander einem Point-In-Polygon-Test (PIP-Test) unterzogen, um herauszufinden, ob sich die aktuelle Fahrzeugposition in dem geprüften Gebiet befindet, und das als aktuell passend ermittelte Gebiet bzw. eine Kennung desselben ist die einem Fahrerassistenzsystem des Kraftfahrzeugs zugeführte Ausgangsgröße.

In einem zweiten Ausführungsbeispiel wird jedes im Block 1 identifizierte Kandidaten-Gebietspolygon zunächst im Block 2 durch Überlagern von vielen parallelen Streifen, die sich entlang einer vorgegebenen Koordinatenachse erstrecken, in kleinere Teilpolygone unterteilt. Mittels einer binären Suche, eines im Stand der Technik bekannten Algorithmus, der in einer Liste sehr effizient ein gesuchtes Element findet, wird jener Streifen ermittelt, in den die aktuelle Fahrzeugposition fällt. Die in die jeweiligen Streifen fallenden Teilpolygone aller Kandidaten-Gebietspolygone werden dann im Block 1 nacheinander einem PIP-Test unterzogen, um herauszufinden, ob sich die aktuelle Fahrzeugposition in dem geprüften Teilpolygon befindet.

Die Blöcke 1 bis 3 werden nachfolgend detaillierter beschrieben.

Die Begrenzungs-Vorprüfung im Block 1 von Fig. 1 wird durchgeführt, da die Zahl der zu unterscheidenden Gebiete normalerweise hoch ist. Wie in Fig. 2 gezeigt, wird dazu um jedes Gebietspolygon, wobei hier nur fünf Gebietspolygone 4a, 4b, 4c, 4d, 4e dargestellt sind, ein passender rechteckiger Begrenzungskasten 5a, 5b, 5c, 5d, 5e gezogen, dessen Koordinaten in einem x-y-Koordinatensystem z. B. einfach durch die kleinsten und größten x- bzw. $\gamma$-Koordinaten des entsprechenden Gebietspolygons 4a, 4b, 4c, 4d, 4e gegeben sind.

So kann auf einfachste Weise geprüft werden, in welche der Begrenzungskästen 5a, 5b, 5c, 5d, 5e die Geoposition des Fahrzeugs fällt, nämlich durch Größer/Kleiner-Vergleiche der Werte einer ersten Koordinate der aktuellen Fahrzeugposition mit den entsprechenden maximalen bzw. minimalen Koordinatenwerten der Gebietspolygone 4a, 4b, 4c, 4d, 4e sowie durch Größer/Kleiner-Vergleiche der Werte einer zweiten, zu der ersten Koordinate orthogonalen Koordinate der aktuellen Fahrzeugposition mit den entsprechenden maximalen bzw. minimalen Koordinatenwerten der Gebietspolygone 4a, 4b, 4c, 4d, 4e, wobei die Koordinaten wahlweise kartesische x-$\gamma$-Koordinaten oder Polarkoordinaten sein können.

Alle Gebietspolygone, die zu einem Begrenzungskasten gehören, in den die Geoposition des Fahrzeugs fällt, sind Kandidaten-Polygone, d. h. mögliche Kandidaten für ein Gebiet, in dem sich das Fahrzeug gerade befindet. Alle anderen Gebietspolygone brauchen nicht weiter geprüft zu werden.

Der PIP-Test im Block 3 von Fig. 1 ist eine optimierte sog. Strahl-Methode zur Prüfung, ob ein Punkt innerhalb oder außerhalb eines Polygons liegt. Bei der Strahl-Methode wird von einem zu testenden Punkt aus ein Prüfstrahl in eine beliebige Richtung gezogen, und es wird gezählt, wie oft der Prüfstrahl die Kanten des Polygons schneidet. Ist die Zahl der Schnittpunkte des Prüfstrahls mit den Polygonkanten ungerade, liegt der Punkt innerhalb des Polygons, und anderenfalls außerhalb davon. Die entsprechende Entscheidungsregel lässt sich schreiben als:

$$cn(P,p) \bmod 2 = \begin{cases} 0 \rightarrow p \notin P \\ 1 \rightarrow p \in P \end{cases}$$

Fig. 3 veranschaulicht ein Beispiel für einen entsprechenden PIP-Test bezüglich eines Punktes p, der innerhalb eines Polygons P liegt, sowie bezüglich eines Punktes p', der außerhalb des Polygons P liegt. Von den Punkten p und p' ausgehende Beispiel-Prüfstrahlen sind als S und S' eingezeichnet, und deren Schnittpunkte mit den Polygon-Kanten als kleine Kreise.

Die umfangreichsten Rechenschritte bei der Strahl-Methode sind die Berechnungen der Schnittpunkte. Die hier vorgeschlagene optimierte Strahl-Methode arbeitet ohne Schnittpunktberechnungen unter Verwendung von verbesserten Größer/Kleiner-Vergleichen von Koordinatenwerten, wie nachfolgend beschrieben.

Zuerst wird das Koordinatensystem so verschoben, dass die aktuelle Position des Fahrzeugs im Ursprung liegt. Der Prüfstrahl kann nun als die positive x-Achse eines kartesischen x-y-Koordinatensystems definiert werden. Umfangreiche Schnittpunktberechnungen können vermieden werden, da es nicht notwendig ist, den exakten Schnittpunkt zu kennen, sondern nur, ob die Polygon-Kante die positive Hälfte der x-Achse schneidet. Dies kann in drei einfachen Schritten durchgeführt werden, wie nachfolgend beschrieben.

Es seien $v_i = (x_i, y_i)$ und $v_j = (x_j, y_j)$ die verschobenen Scheitelpunkte der geprüften Polygon-Kante. Eine Innerhalb/Außerhalb-Bedingung kann wie folgt formuliert werden:

1) Verwerfe alle Kanten, die nicht die folgende Bedingung erfüllen:
sign $(y_i) \neq$ sign $(y_j)$

2a) Speichere das Auftreten eines Schnittpunkts, wenn eine Kante die folgende Bedingung erfüllt:
sign $(x_i) > 0$ && sign $(x_j) > 0$

2b) Die Kante ist zu verwerfen, wenn:
sign $(x_i) < 0$ && sign $(x_j) < 0$

3) Speichere das Auftreten eines Schnittpunkts für Kanten mit, wobei b der y-Achsen-Abschnitt der Kante im verschobenen Koordinatensystem ist:

$$(x_i * y_i * b) < 0$$

Mit den Größer/Kleiner-Vergleichen ist der durchgeführte PIP-Test sehr effizient. Es bleibt nur eine Division (bei der Berechnung von b) übrig.

Die obige Berechnung kann statt in einem kartesischen x-y-Koordinatensystem auch in einem Polarkoordinatensystem durchgeführt werden.

Die optionale binäre Streifensuche im Block 3 von Fig. 1 eignet sich besonders für Fälle, in denen die einzelnen Gebietspolygone einer Polygonkarte sehr viele oder sehr unterschiedlich viele Kanten aufweisen. Dazu werden die Gebietspolygone oder zumindest solche mit sehr vielen Kanten in kleinere Teilpolygone unterteilt, die jeweils ungefähr die gleiche Zahl von Polygon-Kanten enthalten und die hier Streifen oder "Bins" genannt werden. In dem in Fig. 4 gezeigten Beispiel wird ein Polygon P durch fünf Streifen $B_1$ bis $B_5$ in kleinere Teilpolygone zerlegt.

Die in einem einzelnen Streifen enthaltenen Kanten werden als unabhängige Polygone interpretiert und behandelt. Auf diese Weise werden Gebietspolygone, die natürlicherweise unterschiedliche Größen und Formen haben, auf Polygone von ungefähr gleicher Größe skaliert. Die Durchführung der PIP-Tests an kleineren Stücken kann besser verwaltet werden, und die Rechenzeit ist weniger abhängig von der Polygongröße und -form.

Vor Durchführung der PIP-Tests bzw. Schnittpunkt-Tests muss der Streifen ermittelt werden, in den die aktuelle Fahrzeugposition fällt. Dies kann durch eine sog. binäre Suche geschehen, welche die Komplexität O (n) beim Prüfen von n Streifen in chronologischer Reihenfolge auf O (log n) vermindert.

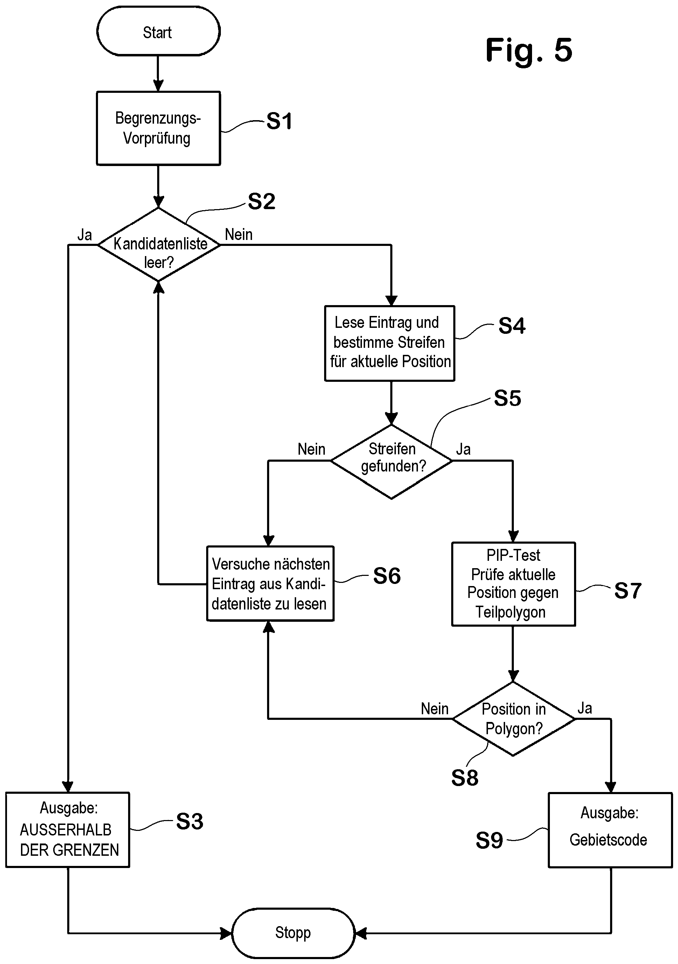

Das zweite Ausführungsbeispiel des Verfahrens zum Ermitteln, in welchem geografischen Gebiet sich ein Fahrzeug gerade befindet, ist in Fig. 5 auch als Flussdiagramm dargestellt. Das Verfahren wird kann zyklisch gestartet werden und beginnt jeweils mit dem Schritt S1, eine Begrenzungs-Vorprüfung wie im Block 1 von Fig. 1 durchzuführen und ermittelte Kandidaten-Polygone in eine Liste einzutragen.

Wenn im Schritt S2 festgestellt wird, dass die Liste von Kandidaten-Polygonen leer ist, wird im Schritt S3 als Ergebnis des Verfahrens ausgegeben, dass sich die aktuelle Fahrzeugposition in keinem Gebiet der digitalen Karte befindet, und das Verfahren endet. Andernfalls wird im Schritt S4 ein Eintrag aus der Liste von Kandidaten-Polygonen ausgelesen und wird mittels der binären Streifensuche im Block 2 von Fig. 1 nach einem Streifen für die aktuelle Fahrzeugposition gesucht.

Im Schritt S5 wird geprüft, ob es einen entsprechenden Streifen gibt, und wenn nicht, wird im Schritt S6 bewirkt, dass im Schritt S4 der nächste Eintrag, falls vorhanden, aus der Liste von Kandidaten-Polygonen ausgelesen und dem Schritt S5 zugeführt wird.

Wenn im Schritt S5 ein Streifen gefunden worden ist, wird im Schritt S7 das darin enthaltene Teilpolygon dem PIP-Test im Block 3 von Fig. 1 unterzogen. Wenn sich im Schritt S8 zeigt, dass die aktuelle Fahrzeugposition nicht in dem Teilpolygon liegt, geht es zum Schritt S6 zurück, und wenn es darin liegt, wird im Schritt S9 als Ergebnis des Verfahrens ein Gebietscode ausgegeben, der dem Gebietspolygon zugeordnet ist, in dem sich das Teilpolygon befindet.

## Patentansprüche

1. Verfahren, mittels numerischer Geopositionsdaten, welche die aktuelle Geoposition eines Fahrzeugs angeben, sowie digitaler Karten, die Gebietspolygone enthalten, die jeweils ein geografisches Gebiet auf der Erde repräsentieren, in dem Fahrzeug zu ermitteln, in welchem der verschiedenen Gebiete sich das Fahrzeug gerade befindet, wobei eine Begrenzungs-Vorprüfung durchgeführt wird, wobei Kandidaten-Gebietspolygone ausgewählt werden, die in der Nähe der aktuellen Fahrzeugposition liegen (1); und die ausgewählten Kandidaten-Gebietspolygone nacheinander einem PIP-Test unterzogen werden (3), um zu ermitteln, ob sich die aktuelle Fahrzeugposition in einem der entsprechenden Gebiete befindet; **dadurch gekennzeichnet, dass** die mittels der Begrenzungs-Vorprüfung ausgewählten Kandidaten-Gebietspolygone durch Überlagern von parallelen Streifen in kleinere Teilpolygone unterteilt werden, dass mittels einer binären Suche ein Streifen ermittelt wird, in den die aktuelle Fahrzeugposition fällt, und dass nur die dem ermittelten Streifen entsprechenden Teilpolygone den PIP-Tests unterzogen werden; und dass eine Ausgangsgröße, die angibt, ob und ggf. in welchem der Gebiete sich das Fahrzeug gerade befindet, mindestens einem Fahrerassistenzsystem des Fahrzeugs zugeführt wird.

2. Verfahren nach Anspruch 1,
   **dadurch gekennzeichnet, dass**
   die Begrenzungs-Vorprüfung mittels Größer/Kleiner-Vergleichen der Werte einer ersten Koordinate der aktuellen Fahrzeugposition mit den maximalen bzw. minimalen Koordinatenwerten der Gebietspolygone bezüglich der ersten Koordinate sowie mittels Größer/Kleiner-Vergleichen der Werte einer zweiten, zu der ersten Koordinate orthogonalen Koordinate der aktuellen Fahrzeugposition mit den maximalen bzw. minimalen Koordinatenwerten der Gebietspolygone bezüglich der zweiten Koordinate durchgeführt wird.

3. Verfahren nach Anspruch 1 oder 2,
   **dadurch gekennzeichnet, dass**
   die PIP-Tests ohne Schnittpunktberechnungen mittels Größer/Kleiner-Vergleichen von Koordinatenwerten nach geeigneter Koordinatenverschiebung durchgeführt werden.

4. Verfahren nach einem der vorhergehenden Ansprüche,
   **dadurch gekennzeichnet, dass**
   die geografischen Gebiete administrative Gebiete sind.

5. Verfahren nach einem der vorhergehenden Ansprüche,
   **dadurch gekennzeichnet, dass**
   das Fahrzeug ein Kraftfahrzeug ist.

6. Fahrzeug, insbesondere Kraftfahrzeug, in dem ein die Geopositionsdaten liefernder Empfänger für ein globales Navigationssatellitensystem, aber kein Navigationssystem eingebaut ist und das mindestens ein Fahrerassistenzsystem aufweist,
   **dadurch gekennzeichnet, dass**
   das Fahrzeug dafür eingerichtet ist, das Verfahren nach einem der vorhergehenden Ansprüche durchzuführen.

## Claims

1. Method for determining by means of numeric geoposition data which specify the current geoposition of a vehicle, and digital maps which contain area polygons which in each case represent a geographic area on the earth, in the vehicle in which of the various areas the vehicle is currently located, wherein a boundary precheck is performed, wherein candidate area polygons are selected which are located in the vicinity of the current vehicle position (1); and the selected candidate area polygons are successively subjected to a PIP test (3) in order to determine whether the current vehicle position is located in one of the corresponding areas;

**characterized in that**
the candidate area polygons selected by means of the boundary precheck are subdivided into smaller part-polygons by superimposing parallel strips, **in that** by means of a binary search, a strip is determined into which the current vehicle position falls and **in that** only the part-polygons corresponding to the strip determined are subjected to the PIP tests; and **in that** an initial variable which specifies whether the vehicle is currently located in an area and possibly in which of the areas the vehicle is currently located is supplied to at least one driver assistance system of the vehicle.

2. Method according to Claim 1,
   **characterized in that**
   the boundary precheck is performed by means of larger/smaller comparisons of the values of a first coordinate of the current vehicle position with the maximum or minimum coordinate values, respectively, of the area polygons with respect to the first coordinate and by means of larger/smaller comparisons of the values of a second coordinate, orthogonal to the first coordinate, of the current vehicle position with the maximum or minimum coordinate values, respectively, of the area polygons with respect to the second coordinate.

3. Method according to Claim 1 or 2,
   **characterized in that**
   the PIP tests are performed without point of intersection calculations by means of larger/smaller comparisons of coordinate values after a suitable coordinate displacement.

4. Method according to one of the preceding claims,
   **characterized in that**
   the geographic areas are administrative areas.

5. Method according to one of the preceding claims,
   **characterized in that**
   the vehicle is a motor vehicle.

6. Vehicle, particularly motor vehicle, in which a receiver supplying the geoposition data for a global navigation satellite system but no navigation system is installed and which has at least one driver assistance system,
   **characterized in that**
   the vehicle is configured for performing the method according to one of the preceding claims.


**Revendications**

1. Procédé permettant, au moyen de données de position géographique numériques indiquant la position géographique actuelle d'un véhicule, ainsi qu'au moyen de cartes numériques contenant des polygones de zone représentant respectivement une zone géographique sur la terre, de déterminer dans le véhicule dans laquelle des différentes zones se trouve le véhicule actuellement, dans lequel
   une vérification préalable de délimitation est effectuée lors de laquelle des polygones de zone candidats sont sélectionnés, lesquels se trouvent à proximité de la position de véhicule actuelle (1) ; et
   les polygones de zone candidats sélectionnés sont soumis (3) consécutivement à un test PIP (point dans un polygone) pour déterminer si la position de véhicule actuelle se trouve dans l'une des zones correspondantes ;
   **caractérisé en ce que**
   les polygones de zone candidats sélectionnés au moyen de la vérification préalable de délimitation sont divisés en polygones partiels plus petits par la superposition de bandes parallèles, **en ce qu'**au moyen d'une recherche binaire, une bande est déterminée dans laquelle tombe la position de véhicule actuelle, et **en ce que** seuls les polygones partiels correspondants à la bande déterminée sont soumis au test PIP ;
   et **en ce qu'**une variable initiale spécifiant si le véhicule se trouve actuellement dans une zone, et le cas échéant dans laquelle, est fournie à au moins un système d'assistance au conducteur du véhicule.

2. Procédé selon la revendication 1,
   **caractérisé en ce que**
   la vérification préalable de délimitation est effectuée au moyen d'une comparaison supérieur/ inférieur des valeurs d'une première coordonnée de la position de véhicule actuelle aux valeurs de coordonnées maximales ou minimales des polygones de zone par rapport à la première coordonnée, ainsi qu'au moyen de comparaisons supérieur/inférieur des valeurs d'une deuxième coordonnée, orthogonale à la deuxième coordonnée, de la position de véhicule actuelle aux valeurs de coordonnées maximales ou minimales des polygones de zone par rapport à la deuxième coordonnée.

3. Procédé selon la revendication 1 ou 2,
   **caractérisé en ce que**
   les tests PIP sont effectués sans calculs de points d'intersection au moyen de comparaisons supérieur/inférieur de valeurs de coordonnées après un déplacement de coordonnées adéquat.

4. Procédé selon l'une quelconque des revendications précédentes,
   **caractérisé en ce que**
   les zones géographiques sont des zones administratives.

5. Procédé selon l'une quelconque des revendications précédentes,
**caractérisé en ce que**
le véhicule est un véhicule automobile.

6.  Véhicule, en particulier véhicule automobile, dans lequel est installé un récepteur fournissant les données de position géographique pour un système global de satellites de navigation, mais dans lequel aucun système de navigation n'est installé et qui présente au moins un système d'assistance au conducteur,
    **caractérisé en ce que**
    le véhicule est aménagé pour effectuer le procédé selon l'une quelconque des revendications précédentes.

# Fig. 1

Gebietserkennung

Aktuelle GPS-Position

Polygon-Karte

Begrenzungs-Vorprüfung

Binäre Streifensuche

PIP-Test

Aktuelles Gebiet

1    2    3

# Fig. 2

5b  4b  4c  5c  4d  5d

4a

5a

4e

5e

y

x

# Fig. 3

S'  p'  P

p

$cn(P,p`) = 2$
$cn(P,p) = 5$

S

y

x

# Fig. 4

$B_5$

$B_4$

$B_3$

$B_2$

$B_1$

P

y

x

# Fig. 5

Start

Begrenzungs-Vorprüfung — S1

S2
Kandidatenliste leer?
Ja — Nein

Lese Eintrag und bestimme Streifen für aktuelle Position — S4

S5
Streifen gefunden?
Nein — Ja

Versuche nächsten Eintrag aus Kandidatenliste zu lesen — S6

PIP-Test Prüfe aktuelle Position gegen Teilpolygon — S7

Position in Polygon?
Nein — Ja
S8

Ausgabe: AUSSERHALB DER GRENZEN — S3

S9 — Ausgabe: Gebietscode

Stopp

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140372024 A1
- US 20140278038 A1
- US 2001024203 A1
- US 2012123677 A1
- US 2007083325 A1